Europäisches Patentamt

European Patent Office

Office européen des brevets

(11) Publication number: **0 218 363**
**B1**

# (12) EUROPEAN PATENT SPECIFICATION

(45) Date of publication of patent specification: **22.11.90**

(21) Application number: **86306760.9**

(22) Date of filing: **02.09.86**

(51) Int. Cl.$^5$: **C 04 B 28/34** // (C04B28/34, 14:06, 20:10, 24:06, 24:08)

(54) Magnesium phosphate fast-setting cementitious compositions containing set retardants.

(30) Priority: **06.09.85 US 773262**

(43) Date of publication of application:
**15.04.87 Bulletin 87/16**

(45) Publication of the grant of the patent:
**22.11.90 Bulletin 90/47**

(84) Designated Contracting States:
**BE DE FR GB NL**

(56) References cited:
**EP-A-0 133 733**
**WO-A-85/00586**
**DE-A-2 126 521**
**US-A-3 832 193**
**US-A-4 089 692**
**US-A-4 417 925**

(73) Proprietor: **RHONE-POULENC BASIC CHEMICALS CO.**
**1 Corporate Drive**
**Shelton, CT 06484 (US)**

(72) Inventor: **Sherif, Fawzy Gamaleldin**
**2 Babcock court**
**Stony Point New York 10980 (US)**

(74) Representative: **Smith, Sydney et al**
**Elkington and Fife Beacon House 113 Kingsway**
**London WC2B 6PP (GB)**

**Description**

This invention relates to fast-setting magnesium phosphate cementitious compositions. More particularly, it relates to improved compositions containing organic carboxylic acids and their salts and derivatives which retards the initial setting time, reduces the amount of water required, and increases the compressive strength of the resulting hardened mass.

Cementitious compositions having a very fast setting time and prepared by mixing a magnesium-containing component with an ammonium phosphate component and an optional aggregate are popular for use in repairing or patching cracks, holes and spalled areas of highways, airfield pavements and bridge decks, as well as for a variety of commercial and industrial applications.

U.S. Patent No. 3,879,209 (Limes et al., April 22, 1975) discloses a process for making such a fast-setting concrete comprising establishing a mixture of an aggregate, containing at least 10 percent by weight of magnesia, and ammonium phosphates in aqueous solution. This patent discloses that a commercial agricultural fertilizer product known as sequestered phosphatic solution (SPS) is particularly suitable as a source of the ammonium phosphate. This reference is one of many references which disclose a class of magnesium phosphate fast-setting cementitious compositions which when mixed with an aqueous component sets at ambient temperatures in substantially less than one-half hour after mixing. The strength development of these compositions is sufficiently rapid to permit, e.g., automobile traffic thereover, within a few hours following application. Additionally, these compositions exhibit excellent adhesion to various substrates, e.g. Portland cement concrete and steel, and they attain high compressive strength and are quite durable.

U.S. Patent No. 2,522,548 (Streicher, September 19, 1950) discloses the preparation of phosphate gel binders by reacting metal oxides, e.g. magnesium oxide, and primary phosphate solutions. Streicher further discloses that borax acts as an accelerating agent up to about 0.5 percent based on the amount of filler used in the phosphate gel binder. However, by adding more than 0.5 percent of borax and up to 1 percent thereof an increased retarder action is produced. However, this reference is directed to the use of these phosphate gel binders in a refractory application and further states that the primary ammonium phosphate is not effective in its process.

U.S. Patent No. 3,475,188 (Woodhouse, October 28, 1969) discloses a refractory composition comprising a liquid bonding agent, for example, sequestered phosphatic solution, that is diammonium phosphate and polyphosphate, absorbed onto an absorbent, for example, quartzite, and a particulate refractory substance containing MgO. This reference states that advantageous 0.5 to 2 percent of boric acid can be incorporated and that short setting times were considered undesirable. However, nowhere does this reference state that boric acid overcomes this undesirably short setting time. This reference further states that phosphoric acid and magnesia resulted in relatively low strength chemically bonded compositions due to their rapid reaction. Again, this reference is directed to refractory compositions and does not disclose the compositions of the present invention.

U.S. Patent No. 3,333,972 (Elmer et al., August 1, 1967) discloses a cementitious refractory material consisting essentially of an intimate admixture of finely divided, non-plastic magnesia and from 0.1 percent to 15 percent of at least one substance chosen from the group consisting of an aliphatic hydroxytricarboxylic acid and a salt of said acid. A preferred acid is citric acid. This reference does not disclose the improved, fast-setting magnesium phosphate cementitious composition of this invention.

U.S. Patent No. 4,089,692 (Toeniskoetter et al., May 16, 1978) discloses settable compositions containing aluminum phosphate, a solid organic carboxylic acid, water and material containing an alkaline earth metal and an oxide. Suitable acids include lactic acid, tartaric acid, citric acid, oxalic acid, malonic acid and gluconic acid. The fast-setting cementitious compositions of this reference all include aluminum phosphate. These compositions are significantly different from the improved compositions of this invention.

U.S. Patent No. 427,591 (Martin et al., May 13, 1890) discloses the use of ciuric acid as a retarder for the setting of sulfate of lime base cements or plaster of paris. Again this reference does not disclose the unique fast-setting magnesium phosphate cementitious compositions of this invention.

U.S. Patent No. 2,116,910 (Piccard, May 10, 1938) discloses plasters for the production of surgical casts which comprise an anhydrous mixture of a basic compound containing no element having an atomic weight greater than that of phosphorus as, for example, the oxides, hydroxides or carbonates of lithium, sodium, beryllium, aluminum, magnesium, etc., and an acid or acid salt likewise containing no such heavy elements as, for example, organic acids, as benzoic acids, salicylic acids, oxalic acids, etc. or salts of ammonia or an alkali metal with an inorganic acid, as phosphoric acid, etc., as diammonium hydrogen phosphate, ammonium dihydrogen phosphate, or other water soluble phosphates. This reference does not disclose the unique fast-setting magnesium phosphate cementitious compositions of this invention.

U.S. Patent No. 4,028,125 (Martin, June 7, 1977) discloses Portland cement compositions containing hydroxypolycarboxylic acids and their salts, e.g. citric acid or tartaric acid, as set retarders. This reference is limited to Portland cement compositions.

European Patent application No. 0133733 discloses a particularly effective solid phosphorus pentoxide material suitable for use in these fast-setting magnesium phosphate cements. This material is prepared by a process which comprises mixing a porous material with a liquid phosphorus pentoxide material and heating the mixture until a dry solid is produced. This solid phosphorus pentoxide material can then be dry blended with a solid component comprising magnesium oxide, magnesium hydroxide, magnesium carbonate or mixtures thereof. An aggregate can optionally be added to this dry blend. When hydrated, this dry blend has been found particularly advantageous in the fast-setting magnesium phosphate cement applications described above. However, when the ambient temperature is high, e.g. in the summer time or year round in tropical climates, the initial setting time of this composition is reduced. Setting times of from about 1 to about 10 minutes do not allow the operator to properly mix the material and apply it in its end use application prior to the material setting and thereby becoming unworkable. A composition with a retarded initial setting time would be advantageous. However, this retarded setting time should not be so long that the advantages of the fast-setting cement are lost. The retarder used in the cement should not reduce high early strength to allow, for example, traffic to flow after pot hole repair within a few minutes.

U.S. Patent No. 3,960,580 (Stierli et al., June 1, 1976) discloses that the setting time of quick-setting magnesium oxide/ammonium phosphate concretes can be extended by the addition of specified oxy-boron compounds such as sodium borate. This reference further discloses that the incorporation of these oxy-boron compounds have also been found to increase only the extended or overall compressive strength of the composition. The oxy-boron compounds used as retarders reduces the high early strength of the cement. This is a significant disadvantage because high early strength should be a major property of fast-setting magnesium phosphate cements. The phosphate component of the cementitious compositions disclosed by Stierli et al. appears to contemplate either a dry solid monoammonium phosphate component, or a solid monoammonium phosphate component comprising a mixture of monoammonium phosphate and another solid phosphate selected from diammonium phosphate and sodium pyrophosphate. A solid activator component comprising a $P_2O_5$ material absorbed onto a porous material is not contemplated or disclosed.

Because the normally fast-setting magnesium phosphate cements set even more rapidly with increasing ambient temperature, the time allowed for working these compositions, e.g., for mixing the composition with water and applying to, for example, a pot hole, because substantially reduced at the higher ambient temperatures. This reduction of working time poses a problem especially in summer and in tropical environments when the ambient temperature is significantly above 70°F. Attempts at on-the-spot corrective measures by the work crew such as adding additional water usually adversely affects the strength of the composition and accelerates setting time rather than retards setting time as reported by Stierli et al. There is a need, therefore, for a practical method of retarding the setting time without sacrificing high early compressive strength and thereby extending the working time of the magnesium phosphate fast-setting cementitious compositions and particularly the more effective generation of fast-setting cements as disclosed in European Patent Application No. 0133733 discussed above.

An object of this invention is to provide fast-setting magnesium phosphate cementitious compositions that give adequate working time at high ambient temperatures while maintaining the other desirable properties of these compositions. It is a further object of this invention to provide fast-setting magnesium phosphate cementitious compositions that allow the use of reduced quantities of water while increasing or at least maintaining the compressive strength of the hardened cementitious mass resulting after hydration and setting.

Other objects and advantages of the present invention are described elsewhere within this specification.

In accordance with the present invention, an improved dry fast-setting magnesium phosphate cementitious composition has now been discovered which is capable of setting to a hardened mass at ambient temperatures following the addition of water thereto which comprises:

(a) a solid activator prepared by

i) mixing diatomaceous earth with a sufficient amount of an ammonium polyphosphate solution to form at least a paste.

ii) heating the paste to form a dry solid, and

iii) milling the dry solid and wherein the dry solid comprises from about 10 to about 70 weight% of the ammonium polyphosphate and from about 30 to about 90 weight% of the diatomaceous earth;

(b) from about 4 to about 50 weight% of a magnesium-containing component calculated as MgO; and

(c) an organic carboxylic acid, salt or acid derivative in an amount effective to retard the setting time of the cementitious composition.

The cementitious compositions of this invention can further comprise an aggregate.

The ammonium polyphosphate solution can further include various acidic phosphorus compounds, e.g., orthophosphoric acid, pyrophosphoric acids and other polyphosphoric acids and their salts.

The ammonium phosphate solution is preferably a fertilizer solution which contains a mixture of ortho- and polyphosphates and in its original aqueous state undergoes continuous hydrolysis while standing whereby the weight ratios of the different phosphate forms keep changing, usually from high polyphosphate and low orthophosphate contents to low polyphosphate and high orthophosphate contents as the fertilizer ages. The polyphosphates of this fertilizer solution can include pyro-, tri-, tetra-, etc., phosphate species. Because of this continuous hydrolysis, magnesium phosphate cements using liquid ammonium phosphate fertilizer by itself as the $P_2O_5$ component exhibit unpredictable qualities. Usually, when a fresh fertilizer solution is used, the cement mixture does not set at all or only forms a weak cement, and when an older fertilizer solution is used, the cement sets very rapidly with little or no working time to apply the cement. Liquid fertilizer solution upon standing precipitates hard to handle insolubles, and in cold weather the liquid freezes and gels creating more handling problems.

A particularly preferred fertilizer solution is Poly-N® 10-34-0 ammonium polyphosphate solution supplied by Arcadian Company and used primarily as an agricultural fertilizer. A typical analysis of the Poly-N® brand fertilizer shows 10.0 weight percent ammoniacal nitrogen and 34 weight percent total $P_2O_5$. Sixty percent of the total $P_2O_5$ is polyphosphate. The commercial product contains approximately 2 weight percent of impurities, which do not adversely effect its use in preparing the solid activator. The major impurities comprise approximately 0.5 weight percent iron, 0.5 weight percent sulfur, 0.2 weight percent magnesium (as MgO) and 0.15 weight percent of fluorine. This commercial product also contains approximately 50 weight percent water.

When the fertilizer solution is absorbed onto the mixed diatomaceous earth to form at least a paste, the fertilizer is held in a bound form and this composition is much more thermally stable in a temperature range of from ambient to about 120°C, than the original fertilizer solution. The resulting dry solid maintains a constant phosphate distribution between the ortho- and polyphosphate species and does not hydrolyze as the original fertilizer solution would.

The diatomaceous earth with which the solution of the ammonium sulphate is mixed can absorb much more than 80 percent by weight, based on the weight of diatomaceous earth, of a phosphate-containing liquid, e.g. liquid ammonium phosphate fertilizer solution, and absorption of 225 percent and above are preferred. Upon drying the diatomaceous earth with the phosphate-containing liquid absorbed therein, the solid $P_2O_5$ activator forms.

The diatomaceous earth comprises from about 30 percent to about 90 percent by weight of the solid activator with about 30 percent to about 65 percent being preferred; can have a density of from 7.0 to 19.5 pounds/cubic foot (0.112 to 0.312 gms/cc); can have a water absorption value of from 170 percent to 255 percent by weight; and can have surface area of from 1 to 100 $M^2/g$. It is believed that when diatomaceous earth is mixed with liquid ammonium phosphate fertilizer and heated to form the dry solid activator, more than a physical entrapment of the $P_2O_5$ material occurs.

The liquid ammonium phosphate is mixed with the diatomaceous earth at ambient temperature to form at least a paste. The amount of liquid $P_2O_5$ material added is important. Amounts up to that which will fill the pores of the porous material can be used with one drying step. Amounts exceeding the pore volume of the porous material can be absorbed with several drying steps. The paste is heated to a temperature of from about 60°C to about 200°C to drive off moisture and other volatile impurities until a dry solid is produced.

The rate of heating is adjusted so that, upon drying, the pores of the porous material are not blocked with the $P_2O_5$ material, but remain available to the aqueous component when the cement is made. Sufficient porous material should be used to have enough pore volume available to absorb a suitable amount of the $P_2O_5$ material. Upon drying, most of the aqueous component will be driven off, leaving solid $P_2O_5$ material deposited inside and over the walls of the microscopic pores.

The starting materials, i.e. the liquid ammonium phosphate, and the diatomaceous earth are mixed in a preferred embodiment in the proportions necessary to form a dry solid comprising from about 10 percent to about 70 percent by weight of the $P_2O_5$ material and from about 30 percent to about 90 percent by weight of the porous material in the resulting solid activator.

The solid activator prepared as described above is dry blended with a magnesium-containing component and an organic carboxylic acid, salt or acid derivative to yield a dry cementitious composition capable of setting to a hardened mass at ambient temperatures when reacted with an aqueous component. The solid activator can optionally be milled and classified prior to being dry blended with the other components of the cementitious composition. The activator typically has a particle size range of from 100 to 325 mesh and a surface area of from 0.1 to 10 $M^2/g$.

The solid activator can range from about 6 weight percent to about 90 weight percent of the cementitious composition, with a range from about 10 weight percent to about 25 weight percent being preferred.

The magnesium-containing component can be any material capable of releasing magnesium ions making said ions available to react to form a magnesium phosphate. Preferred magnesium-containing compounds are magnesium oxide, magnesium hydroxide and magnesium carbonate. These compounds must be capable of being dry blended with the solid activator without reacting therewith. However, in the presence of an aqueous component the dry blend will react from a monolithic solid. Mixtures of these magnesium compounds can also be employed.

A preferred magnesium-containing component is MgO. This MgO can be of low reactivity, of high reactivity or a mixture of low and high reactivity wherein the ratio of the constituents of the mixture is selected to achieve the working time and cement strength desired. The amount of magnesium-containing component constitutes from about 4 percent to about 50 percent by weight of the overall composition, with from about 5 to about 15 percent by weight being preferred.

The organic carboxylic acid, salt or acid derivative useful in this invention can be aromatic or aliphatic. Examples include citric acid, salicylic acid, glutamic acid, gluconic acid, malonic acid, fumaric acid, lactic acid, tartaric acid, oxalic acid, oleic acid, palmitic acid, stearic acid and the inorganic or organic salts or

4

EP 0 218 363 B1

esters of such acids. Preferably there is employed citric acid or a salt or ester thereof, e.g., diammonium citrate. Mixtures of the materials can be employed if desired.

The organic carboxylic acids, salts or acid derivatives employed according to the present invention are usually solid at normal room temperature (i.e., the normal or usual form in which the acids exists is as a solid) and are soluble in aqueous solutions. These acids or acid derivatives can contain other "functional" substituents or groups within the molecule which do not adversely affect the function of the material in the compositions of the present invention to an undesirable extent. These organic carboxylic acids are generally polymeric or non-polymeric, short or long chained saturated aliphatic or aromatic carboxylic acids. In addition, many of the organic carboxylic acids employed in this invention contain at least two adjacent carbon atoms each having directly attached thereto a carboxylic acid or hydroxyl group.

The organic carboxylic acid, salt or acid derivative of this invention can be added to the fast-setting compositions and slurries of this invention in a variety of ways. They can be added as a dry solid by direct addition or by preblending with another dry solid, e.g., the magnesium-containing component. They can be added as a solution by dissolving them in the water used to hydrate the cement composition. They can also be added by dissolving them in the liquid $P_2O_5$ material that is absorbed onto the porous material during the preparation of the activator.

Generally, the fast-setting cementitious compositions of this invention can be used for producing fast-setting concrete structurs, e.g., structures suitable for roadway construction and roadway patches or other load-bearing uses. However, in its broader aspects, the invention is generally applicable to preparing concrete structures with various characteristics, e.g., high or low strength, for a variety of other purposes as well. The characteristics of any particular concrete structures formed can depend upon the weight ratio of the various components, the nature of the aggregate employed, the temperature conditions of application and the curing conditions as well as other factors.

Fast-setting cement can be applied indoors or outdoors to concrete drives, storage yards, warehouse and factory floors to repair and restore damaged surfaces. Fast-setting cement can be used to fill structural cracks in slabs, and repair highway median barrier walls. This type of cement can be used in almost any situation requiring a quick, permanent repair of concrete. In addition, the fast-setting cement can be used for binding and coating metals and woods for structural and flame resistant applications.

A particular aggregate, preferably graded sand, can be included in the dry blend in a controlled amount as a filler. Aggregate can greatly enhance the strength of the hardened concrete cement. Aggregate usage can range from 0 percent to 90 percent by weight of the dry mix containing aggregate with a range of from about 40 percent to about 80 percent by weight of the dry mix plus aggregate being preferred. Other aggregate materials which can be used include particles of competent rocks or rock-forming minerals such as granite, basalt, dolomite, andesite, feldspar, amphibole, pyroxene, olivine, gabbro, rhyolite, syenite, diorite, dolerite, peridotite, trachyte, obsidian, quartz etc., as well as materials such as slag, cinders, fly ash, glass cullet, wood chips, and fibrous materials such as chopped metal wire (preferably steel), glass fibers, asbestos, cotton, and polyester and aramide fibers. Aggregates having different particle shapes and sizes can be used. Mixtures of different aggregates can also be used. The porous material used to absorb the liquid $P_2O_5$ material can further function as an aggregate.

The dry blend remains a free flowing powder until it is contacted with an aqueous component, preferably water, then a reaction occurs forming a fast-setting cement. The amount of aqueous component used is important. Too much water can convert the dry blend into a thin slurry that will not set until substantial dehydration occurs; and, too little water will not wet the dry blend sufficiently to allow the necessary chemical reaction. The optimum amount of water will depend upon the particular physical characteristics of the constituents of the dry blend, e.g., absorbency, surface area, etc. However, the optimum amount of water must be sufficient to adequately wet the dry blend and optional aggregate mixture to form a thick slurry or non-collapsible putty. This optimum amount of water can be determined on a blend by blend basis. The optimum amount of water can also depend upon the weight of the organic carboxylic acid or acid derivative, the weight of the aggregate, and the temperature at which the cement is hydrated. Usually, the higher the weight of carboxylic acid or acid derivative, the lower is the amount of water needed. The amount of water used can range from about 5 weight percent to about 15 weight percent of the overall composition with from about 8 to about 12 weight percent being preferred.

Generally, the setting time for fast-setting magnesium phosphate cements varies widely and can range from a few seconds up to a few hours. As a practical matter, the setting time must be sufficient to allow the dry blend to be thoroughly mixed with the aqueous component to form a slurry or a non-collapsible putty and be applied to the intended area, whether a mold or a patch, prior to hardening into a monolithic solid. In quantitative terms, fast-setting usually means that the cement hardens in less than 30 minutes, usually in about 1 to 15 minutes, and reaches more than 1,500 psi compressive strength in usually less than 2 hours.

The fast-setting magnesium phosphate cementitious compositions of this invention are characterized by a normal setting time of less than 1/2 hour, more often less than about 15 minutes, at ambient temperatures. It has been found that this initial setting time can be delayed within the range of from about 1 minute up to about 35 minutes or longer depending on the amount of carboxylic acid or acid derivative used.

It has been found that when the carboxylic acid or acid derivative is included in the composition of this invention the initial set time is increased, however, there is an accompanying decrease in the early strength

5

of the resulting cement, particularly compressive strength measurements at the 2 hour and 24 hour time intervals. The compressive strength gradually increases over time. However, high early compressive strength is commercially very significant and desirable. It has been found that if the water used to hydrate the cementitious composition is reduced when the carboxylic acid or acid derivative is used, the initial set time will be increased and the additional benefit of increased early compressive strength will also be achieved. Therefore, the use of the carboxylic acid or acid derivative allows the use of less water and increases the early strength as well as retards initial set time.

The amount of carboxylic acid or acid derivative used in the compositions of this invention can vary according to the particular additive used, the degree of retardation desired and the amount of water reduction with the accompanying increase in early strength desired. Generally, an amount of carboxylic acid or acid derivative ranging from about 0.1 to about 10 percent, preferably about 0.1 to about 5 percent by weight of the cementitious composition has been found suitable. A particularly preferred level of 0.5 weight percent of citric acid has been found to be highly effective in both retarding setting time and allowing sufficient water reduction to achieve high early strength.

In a particular embodiment of the fast-setting magnesium phosphate cementitious composition of this invention, the solid activator is prepared by mixing diatomaceous earth with liquid ammonium phosphate fertilizer to form a semi-solid, drying the semi-solid and milling the dried semi-solid; the magnesium-containing component is a mixture of active and dead burned magnesium oxide; the carboxylic acid is citric acid; and the aggregate is graded silica. In this embodiment, the water added to the composition can be reduced from that usually used when no citric acid is used. The resulting cement will exhibit both increased set time and increased early strength.

The following experiments describe various embodiments of the invention. Other embodiments will be apparent to one of ordinary skill in the art from a consideration of this specification or practice of the invention disclosed therein. It is intended that the specification and experiments be considered as exemplary only, with the true scope and spirit of the invention being indicated by the claims which follow the experiments.

Experiments

Activators were made by mixing 900 grams of Poly-N® 10-34-0 brand ammonium phosphate fertilizer solution (solid by Arcadian Chemical Company) and 400 grams of diatomaceous earth Standard Super Cell grade (Manville Corporation) then treating the mixture by heating at 120°C for 16 hours. The resulting dry solid was milled to allow 60 weight percent to pass through 200 mesh. 158.9 grams of activator was combined with 85.7 grams of MgO (3:1 dead burned:active MgO) and 396.8 grams of graded silica aggregate of maximum size 0.635 cm (1/4 inch) to form 641.4 grams of a magnesium phosphate cementitious mix. This mixture is a 38:62 fast-setting cement mix.

Various weight percents of citric acid monohydrate were added to mixtures made similar to the 38:62 mixture described above at room temperature of about 25°C. The citric acid was added by dry blending it thoroughly with the cementitious mix. Water was added to the mix which was then stirred for 3 minutes. The resulting slurry was poured into a 5.08 cm×10.16 cm (2″×4″) mold. The initial set time and the compressive strength after 2 hours were measured.

The following Table I summarizes the results obtained.

6

TABLE I

Evaluation of citric acid monohydrate in fast-setting cements

| Run | Wt. % citric acid | Parts water per 100 parts solid | Initial set time, mins. |
|---|---|---|---|
| 1 | 0 | 12.6 | 14 |
| 2 | 0.5 | 12.6 | 20 |
| 3 | 1.0 | 12.6 | 24 |
| 4 | 0.5 | 11.4 | 19 |
| 5 | 1.0 | 10.1 | 19 |

| Run | Temperature max. °C | Compressive strength, 2 hrs. psi | Compressive strength, 2 hrs. kPa | Visual flow Estimate |
|---|---|---|---|---|
| 1 | 67 | 3970 | 27373 | Good ~60% |
| 2 | 68 | 3970 | 27373 | Soupy ~80% |
| 3 | 62 | 3220 | 22201 | Very soupy >100% |
| 4 | 66 | 5130 | 35371 | Good ~60% |
| 5 | 56 | 5130 | 35371 | Stiff ~40% |

The above data indicates that citric acid retards initial set time as well as acts as a water reducing agent. At a constant water level the flow of the cement was increased without a reduction of compressive strength (see Runs 1 and 2) when the citric acid was added at 0.5 weight percent. At a 10 percent reduced water level, the flow of the cement was about the same as the control and compressive strength improved about 30 percent (see Runs 1 and 4).

The use of citric acid monohydrate or diammonium citrate appeared to have no adverse effects on longer term compressive strengths. Strength gains with time were found in cements containing citric acid or diammonium citrate. These results are summarized below in Tables II and III respectively.

TABLE II
Effect of citric acid monohydrate on long term compressive
strength of fast-setting cement

Study I[1]—Addition of 1.0 weight percent citric acid monohydrate

| | Compressive strength | | | |
|---|---|---|---|---|
| Time | Control | | 1.0 wt.% citric acid | |
| | psi | kPa | psi | kPa |
| 2 hrs. | 5225 | 36026 | 6060 | 41783 |
| 24 hrs. | 6000 | 41370 | 8740 | 60262 |
| 7 days | 7800 | 53781 | 10000 | 68950 |
| 27 days | 9800 | 67571 | 10900 | 75155 |

[1]The citric acid was dry blended with a 38:62 fast-setting cementitious mix and 48 milliliters of water was added to 404 grams of cement mix. The control contained no citric acid and 51 milliliters of water was added to 404 grams of cement mix.

Study II[2]—Addition of 0.5 weight percent citric acid monohydrate

| | Compressive strength | |
|---|---|---|
| Time | psi | kPa |
| 2 hrs. | 4390 | 30269 |
| 24 hrs. | 5840 | 40266 |
| 7 days | 7710 | 53160 |
| 21 days | 8420 | 58055 |

[2]The citric acid was dry blended with a 38:62 fast-setting cementitious mix. 51 milliliters of water was added to 404 grams of cement mix. There was no control.

TABLE III
Effect of diammonium citrate on long-term compressive
strength of fast-setting cement

| | Performance data[1] weight percent diammonium citrate | | | | | | | |
|---|---|---|---|---|---|---|---|---|
| | 0% | | 0.25% | | 0.5% | | 1.0% | |
| Time | psi | kPa | psi | kPa | psi | kPa | psi | kPa |
| 2 hrs. | 3840 | 26476 | 3130 | 21581 | 4480 | 30889 | 4840 | 33371 |
| 24 hrs. | 5030 | 34681 | 5290 | 36474 | 5680 | 39163 | 7320 | 50471 |
| 7 days | 6970 | 48059 | 6810 | 46954 | 7320 | 50471 | 9740 | 67157 |
| Milliliters water per 404 grams cement mix | 51 mls | | 48 mls | | 46 mls | | 41 mls | |
| Wt.% water | 12.6% | | 11.9% | | 11.3% | | 10.1% | |

[1]The diammonium citrate was dry blended with a 38:62 fast-setting cementitious mix.

8

Various solid organic carboxylic acids or acid derivatives where screened for their effect on set time of a 38:62 fast-setting cementitious mix. The results are summarized below in Table IV.

TABLE IV

Effect of carboxylic acid/acid derivative on set time of fast-setting cement

| Carboxylic[1] acid/acid derivative | Weight[2] percent | $t_i$[3] (mins) | $t_f$[4] (mins) | $f_c$[5], 2 hrs. (psi) | kPa |
|---|---|---|---|---|---|
| None (control) | 0 | 7.5—8.0 | 10.0 | 3200 | 22064 |
| Boric acid (control) | 0.5 | 13.0 | 18.0 | — | |
| Oxalic acid | 0.5 | 7.5 | 13.0 | 5400 | 37233 |
| Oxalic acid | 1.0 | 7.5 | 11.0 | — | |
| Oxalic acid | 2.0 | 7.5 | 10.0 | — | |
| Ammonium oxalate | 0.5 | 8.0 | 10.5 | — | |
| Ammonium oxalate | 1.0 | 12.5 | 15.0 | 3700 | 25511 |
| Citric acid | 0.5 | 11.0 | 13.0 | 4000 | 27580 |
| Citric acid | 1.0 | 11.5 | 13.0 | 3400 | 23443 |
| Citric acid | 2.0 | 11.0 | 13.0 | 3500 | 24132 |
| Fumaric acid | 0.5 | 9.0 | 12.0 | — | |
| Fumaric acid | 1.0 | 10.5 | 14.0 | 3600 | 24822 |
| Fumaric acid | 2.0 | 11.0 | 14.0 | — | |
| Fumaric acid | 5.0 | 9.0 | 11.0 | 1600 | 11032 |
| Lactic acid | 0.5 | 7.0 | 8.5 | — | |
| Gluconic acid | 0.75 | 8.5 | 10.5 | — | |
| Sodium gluconate | 0.5 | 9.0 | 10.5 | — | |
| Ammonium gluconate | 1.0 | 12.0 | 14.0 | 2900 | 19995 |
| Salicylic acid | 0.5 | 8.0 | 10.0 | 3300 | 22753 |
| Salicylic acid | 1.0 | 12.0 | 17.0 | 3300 | 22753 |
| Salicylic acid | 2.0 | 14.0 | 17.0 | 1900 | 13100 |
| Salicylic acid | 5.0 | 21.0 | 23.0 | 800 | 5516 |
| Glutamic acid | 0.5 | 8.5 | 11.0 | 5220 | 35991 |
| Potassium bitartrate | 1.0 | 8.5 | 10.0 | 5350 | 36888 |

[1]Boric acid, a known retarder, was used as a control.
[2]Weight percent of the additive carboxylic acid/acid derivative and boric acid.
[3]Initial set time using the Gillmore needle in ASTM C-266-77.
[4]Final set time using the Gillmore needle in ASTM C-266-77.
[5]Compressive strength after two hours.

Salicylic acid, ammonium gluconate, ammonium oxalate, citric acid and fumaric acid were identified by this screening for further testing as potential set retarders for fast-setting cements.

**Claims**

1. An improved dry fast-setting magnesium phosphate cementitious composition capable of setting to a hardened mass at ambient temperatures following the addition of water thereto which comprises:

(a) a solid activator prepared by

i) mixing diatomaceous earth with a sufficient amount of an ammonium polyphosphate solution to form at least a paste.

ii) heating the paste to form a dry solid, and

iii) milling the dry solid and wherein the dry solid comprises from about 10 to about 70 weight% of the ammonium polyphosphate and from about 30 to about 90 weight% of the diatomaceous earth;

(b) from about 4 to about 50 weight % of a magnesium-containing component calculated as MgO; and

(c) an organic carboxylic acid, salt or acid derivative in an amount effective to retard the setting time of the cementitious composition.

2. A cementitious composition as claimed in Claim 1 characterised in that the magnesium-containing component is magnesium oxide, hydroxide, carbonate or mixtures thereof.

3. A cementitious composition as claimed in Claim 1 or Claim 2 characterised in that the carboxylic acid or acid derivative is added to the ammonium polyphosphate solution.

4. A cementitious composition as claimed in Claim 1 or Claim 2 characterised in that the carboxylic acid, salt or acid derivative is blended with the magnesium-containing component.

5. A cementitious composition as claimed in any of Claims 1 to 4, characterised in that the carboxylic acid, salt or acid derivative is selected from citric acid, salicylic acid, glutamic acid, gluconic acid, the ammonium salts of the preceding acids, malonic acids, fumaric acid, oleic acid, palmitic acid, stearic acid and mixtures thereof.

6. A cementitious composition as claimed in any of Claims 1 to 5 characterised in that it further comprises an aggregate.

7. A cementitious composition as claimed in Claim 1 characterised in that the magnesium-containing component is magnesium oxide, the carboxylic acid is citric acid and which composition further comprises a silica aggregate.

8. A cementitious composition as claimed in any of the preceding claims characterised in that the carboxylic acid, salt or acid derivative is blended with the solid activator.

**Patentansprüche**

1. Verbesserte, trockene, schnellabbindende, zemtentartige Magnesiumphosphatzusammensetzung, die nach Zugabe von Wasser bei Raumtemperatur zu einer gehärteten Masse abbinden kann und die enthält:

(a) einen festen Aktivator, der hergestellt wurde durch

i) Mischen von Diatomeenerde mit einer so großen Menge einer Ammoniumpolyphosphatlösung, daß mindestens eine Paste gebildet wird,

ii) Erhitzen der Paste, um einen trockenen Feststoff zu bilden, und

iii) Mahlen des trockenen Feststoffes, wobei der trockene Feststoff von etwa 10 bis etwa 70 Gew.-% an Ammoniumpolyphosphat und von etwa 30 bis etwa 90 Gew.-% an Diatomenerde aufweist;

(b) von etwa 4 bis etwa 50 Gew.-% einer magnesium-enthaltenden Komponente, berechnet als MgO; und

(c) eine organische Carbonsäure, ein Salz oder ein Säurederivat davon in einer solchen Menge, daß die Abbindezeit der zementartigen Zusammensetzung verzögert wird.

2. Zementartige Zusammensetzung nach Anspruch 1, dadurch gekennzeichnet, daß es sich bei der magnesium-enthaltenden Komponente um Magnesiumoxyd, -hydroxyd, oder -carbonat oder um Mischungen davon handelt.

3. Zementartige Zusammensetzung nach Anspruch 1 oder 2, dadurch gekennzeichnet, daß die Carbonsäure oder das Säurederivat zur Ammoniumpolyphosphatlösung hinzugegeben wird.

4. Zementartige Zusammensetzung nach Anspruch 1 oder 2, dadurch gekennzeichnet, daß die Carbonsäure, das Salz oder das Säurederivat mit der magnesium-enthaltenden Komponente vermischt wird.

5. Zementartige Zusammensetzung nach einem der Ansprüche 1 bis 4, dadurch gekennzeichnet, daß die Carbonsäre, das Salz oder das Säurederivat ausgewählt ist unter Zitronensäure, Salicylsäure, Glutaminsäure, Gluconsäure, den Ammoniumsalzen der vorhergehend aufgeführten Säuren, Malonsäure, Fumarsäure, Oleinsäure, Palmitinsäure, Stearinsäure und Mischungen davon.

6. Zementartige Zusammensetzung nach einem der Ansprüche 1 bis 5, dadurch gekennzeichnet, daß sie außerdem ein Aggregat aufweist.

7. Zementartige Zusammensetzung nach Anspruch 1, dadurch gekennzeichnet, daß es sich bei der magnesium-enthaltenden Komponente um Mangesiumoxyd sowie bei der Carbonsäure um Zitronensäure handelt und daß diese Zusammensetzung außerdem ein Silica-aggregat aufweist.

8. Zementartige Zusammensetzung nach einem der vorhergehenden Ansprüche, dadurch gekennzeichnet, daß die Carbonsäure, das Salz oder das Säurederivat mit dem festen Aktivator vermischt wird.

**Revendications**

1. Une composition cimentière sèche améliorée à prise rapide à base de phosphate de magnésium susceptible de donner par prise une masse durcie, à température ambiante, après addition d'eau, qui comprend:

(a) un activateur solide préparé par:

i) mélange de terre de diatomées avec une quantité suffisante pour former au moins un pâte d'une solution de polyphosphate d'ammonium;

ii) le chauffage de la pâte pour former un solide sec; et

iii) le broyage du solide sec; lequel comprend environ 10 à environ 70% en poids de polyphosphate d'ammonium et environ 30 à environ 90% en poids de la terre de diatomées;

(b) d'environ 4 à environ 50% en poids d'un composant contenant du magnésium, calculé en équivalent MgO; et

(c) un acide organique carboxylique, un sel ou un de ses dérivés, en une quantité efficace pour retarder le temps de prise de la composition de ciment.

2. Une composition cimentière selon la revendication 1, caractérisée en ce que le composant contenant du magnésium est de l'oxyde, de l'hydroxyde ou du carbonate de magnésium ou leurs mélanges.

3. Une composition cimentière selon la revendication 1 ou 2, caractérisée en ce que l'acide ou le dérivé d'acid carboxylique est ajouté à la solution de polyphosphate d'ammonium.

4. Une composition cimentière selon la revendication 1 ou 2, caractérisée en ce que l'acide carboxylique, son sel ou son dérivé, est mélangé avec le composant contenant du magnésium.

5. Une composition cimentière selon l'une quelconque des revendications 1 à 4, caractérisée en ce que l'acide carboxylique, son sel ou son dérivée, est choisi dans le groupe consistant en' acide citrique, acide salicylique, acid glutamique, acid gluconique, les sels d'ammonium des acides précédents, les acides maloniques, l'acide fumarique, l'acide oléique, l'acide palmitique, l'acide stéarique et leurs mélanges.

6. Une composition cimentière selon l'une quelconque des revendications 1 à 5, caractérisée en ce qu'elle comprend de plus un agrégat.

7. Une composition cimentière selon la revendication 1, caractérisée en ce que le composant contenant le magnésium est l'oxyde de magnésium, l'acide carboxylique et l'acide citrique et en ce qu'il comprend de plus un agrégat à base de silice.

8. Une composition cimentière selon l'une quelconque des revendications précédentes, caractérisée en ce que l'acide carboxylique, son sel ou son dérivé, est mélangé avec l'activateur solide.